(19) Europäisches Patentamt
European Patent Office
Office européen des brevets

(11) **EP 4 386 014 A1**

(12) **EUROPEAN PATENT APPLICATION**
published in accordance with Art. 153(4) EPC

(43) Date of publication:
**19.06.2024   Bulletin 2024/25**

(21) Application number: **22884083.1**

(22) Date of filing: **21.10.2022**

(51) International Patent Classification (IPC):
*C08F 8/04* (2006.01)          *C08F 2/44* (2006.01)
*C08F 4/04* (2006.01)          *C08F 220/06* (2006.01)
*C08J 3/24* (2006.01)

(52) Cooperative Patent Classification (CPC):
**C08F 2/44; C08F 4/04; C08F 8/04; C08F 220/06;
C08J 3/24**

(86) International application number:
**PCT/KR2022/016113**

(87) International publication number:
**WO 2023/068861 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2021   KR 20210141344
20.10.2022   KR 20220135391**

(71) Applicant: **LG Chem, Ltd.
Yeongdeungpo-gu
Seoul 07336 (KR)**

(72) Inventors:
• **LEE, Serin**
  **Daejeon 34122 (KR)**
• **KIM, Ju Eun**
  **Daejeon 34122 (KR)**
• **LEE, Hoyong**
  **Daejeon 34122 (KR)**
• **LEE, Jungmin**
  **Daejeon 34122 (KR)**

(74) Representative: **Plasseraud IP
66, rue de la Chaussée d'Antin
75440 Paris Cedex 09 (FR)**

(54) **PREPARATION METHOD OF SUPER ABSORBENT POLYMER**

(57)     Provided is a method of preparing a superabsorbent polymer. More specifically, provided is a method of preparing a superabsorbent polymer which realizes excellent drying efficiency by using a specific reducing agent compound and sodium dodecyl sulfate in combination in the polymerization step, thereby improving absorption properties of the polymer.

EP 4 386 014 A1

**Description**

[Technical Field]

Cross-reference to Related Application

The present application is based on, and claims priority from, Korean Patent Application Nos. 10-2021-0141344, and 10-2022-0135391, filed on October 21, 2021, and October 20, 2022, respectively, the disclosures of which are hereby incorporated by reference herein in their entirety.

The present invention relates to a method of preparing a superabsorbent polymer. More specifically, the present invention relates to a method of preparing a superabsorbent polymer which realizes excellent drying efficiency by including a specific reducing agent compound in the polymerization step, thereby improving absorption properties of the polymer.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in hygiene products, now they have been widely used for water retaining soil products for gardening, water stop materials for the civil engineering and construction, sheets for raising seedling, fresh-keeping agents for food distribution fields, materials for poultice or the like.

These superabsorbent polymers are widely used in sanitary materials such as diapers, sanitary pads, etc. Inside the sanitary materials, the superabsorbent polymer is generally distributed throughout pulp. However, recent efforts have been continuously made to provide thinner sanitary materials such as diapers having a thinner thickness, etc., and as part of that, diapers having a reduced content of pulp, and furthermore, diapers having no pulp, so-called pulpless diapers are actively under development.

Such a sanitary material having a reduced content of pulp or having no pulp includes the superabsorbent polymer at a relatively high ratio, and the superabsorbent polymer particles are inevitably included as multiple layers in the sanitary materials. In order to allow the whole superabsorbent polymer particles included as multiple layers to more efficiently absorb a large amount of liquid such as urine, etc., it is necessary that the superabsorbent polymer basically exhibits a high absorption performance and a fast absorption rate.

On the other hand, such a superabsorbent polymer is generally prepared through the step of preparing a water-containing gel polymer containing a large amount of water by polymerizing monomers, and the step of drying the water-containing gel polymer, and then pulverizing the water-containing gel polymer into polymer particles having a desired particle size. The water-containing gel polymer has a property of aggregating with each other, and when it is prepared as aggregated fine particles, there has been a problem in that drying does not occur well in the subsequent drying process. Specifically, due to an increase in the cohesive strength of the water-containing gel polymer, porosity in a dry layer significantly decreases during the drying process, and thus a differential pressure of hot air increases, and thus there has been a problem in that only the outside of the dry layer is dried and the inside is not sufficiently dried. In this case, absorption properties of the superabsorbent polymer finally prepared are influenced, and water retention capacity, absorption rate and the like are lowered, and accordingly, development of a technology to increase the drying efficiency is continuously required.

[Disclosure]

[Technical Problem]

Accordingly, there is provided a method of preparing a superabsorbent polymer, in which a water-containing gel polymer is prepared using a specific additive in the polymerization step to exhibit excellent drying efficiency in the subsequent drying process, and finally, excellent absorption properties may be realized.

[Technical Solution]

To achieve the above object, there is provided a method of preparing a superabsorbent polymer, the method including the steps of:

forming a water-containing gel polymer by crosslinking-polymerizing a water-soluble ethylenically unsaturated monomer having acidic groups of which at least part is neutralized, in the presence of an internal crosslinking agent, a polymerization initiator, sodium dodecyl sulfate, and a reducing agent; and
preparing a base polymer by drying the water-containing gel polymer,
wherein the reducing agent is one or more selected from the group consisting of oxalic acid, sodium metabisulfite, and sodium benzoate, and
the base polymer has an undrying rate of 5wt% or less, the undrying rate defined as a weight ratio of the base polymer that does not pass through a 4 mesh sieve when the base polymer is classified with the sieve according to ASTM E11.

[Effect of the Invention]

According to a method of preparing a superabsorbent polymer of the present invention, a water-containing gel polymer is prepared using a specific reducing agent and sodium dodecyl sulfate in combination in the polymerization step, and thus micropores are formed inside the polymer due to an increase in the polymerization rate, thereby exhibiting excellent drying efficiency in the subsequent drying process, and as a result, an undrying rate of the base polymer may be controlled within a desired range. Finally, there is provided a method of preparing a superabsorbent polymer capable of realizing excellent absorption properties.

[Best Mode for Carrying Out the Invention]

The terms used in this description are just for explaining exemplary embodiments and it is not intended to restrict the present invention.

The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The terms "first, second, third", and the like are used to describe a variety of components, and these terms are merely employed to differentiate a certain component from other components.

The present invention may be variously modified and have various forms, and specific exemplary embodiments are exemplified and explained in detail in the following description. However, it is not intended to limit the present invention to the specific exemplary embodiments, and it must be understood that the present invention includes every modifications, equivalents, or replacements included in the spirit and technical scope of the present invention.

As used herein, the term "polymer" refers to those in a polymerized state of a water-soluble ethylenically unsaturated monomer, and may include all water content ranges or particle size ranges. Among the above polymers, a polymer having a water content (moisture content) of about 40% by weight or more in a state after polymerizing before drying may be referred to as a water-containing gel polymer, and particles obtained by pulverizing and drying such a water-containing gel polymer may be referred to as a crosslinked polymer.

Further, the term "crosslinked polymer" refers to those obtained by crosslinking polymerization of a water-soluble ethylenically unsaturated monomer in the presence of an internal crosslinking agent, and the "base polymer" refers to a material including such a crosslinked polymer.

Further, the term "superabsorbent polymer" refers to, depending on the context, a crosslinked polymer obtained by polymerizing a water-soluble ethylenically unsaturated monomer including acidic groups of which at least part is neutralized, or a base polymer obtained by drying the crosslinked polymer, or is used to encompass those made suitable for commercialization by performing an additional process on the crosslinked polymer or the base polymer, for example, surface crosslinking, re-assembling of fine particles, drying, pulverizing, classifying, etc.

Further, the term "superabsorbent polymer powder" refers to a material in the form of particles, the material including a crosslinked polymer which is obtained by polymerizing a water-soluble ethylenically unsaturated monomer including acidic groups of which at least part is neutralized, and then crosslinking by an internal crosslinking agent.

The method of preparing a superabsorbent polymer according to one embodiment of the present invention includes the steps of forming a water-containing gel polymer by crosslinking-polymerizing a water-soluble ethylenically unsaturated monomer having acidic groups of which at least part is neutralized, in the presence of an internal crosslinking agent, a polymerization initiator, sodium dodecyl sulfate, and a reducing agent; and preparing a base polymer by drying the water-containing gel polymer.

Recently, with the thinning of sanitary materials such as diapers or sanitary napkins, etc., higher absorption performance is required for superabsorbent polymers. In particular, various methods of improving centrifuge retention capacity (CRC), which is a physical property representing the basic absorption and water retention capacity of the superabsorbent polymer, are being considered. However, in order to improve the centrifuge retention capacity (CRC) of the superabsorbent polymer even after surface crosslinking, it is necessary to further improve the centrifuge retention capacity (CRC) of the base polymer. To this end, a method of controlling the amount of internal crosslinking agent to a low level is being considered. However, when the amount of the internal crosslinking agent is reduced, stickiness of the polymer increases, and thus there has been a problem in that drying does not occur well in the subsequent drying process. Specifically, due to an increase in the cohesive strength of the water-containing gel polymer, porosity in a dry layer significantly decreases during the drying process, and thus there has been a problem in that only the outside of the dry layer is dried and the inside is not sufficiently dried. In addition, due to the decreased porosity in the dry layer, a differential pressure of hot air in the dry layer increases, and therefore, in order to realize a desired drying rate, the drying temperature is excessively increased or the longer drying time is taken, and thus there has been a problem in that the process efficiency is significantly lowered. Finally, there has been a problem in that it is difficult to realize the desired absorption properties.

For this reason, the present inventors found that micropores may be effectively formed inside the polymer by increasing the polymerization rate by using a specific reducing agent and sodium dodecyl sulfate in combination in the step of forming the water-containing gel polymer, and appropriate pore space may be formed in the dry layer in the subsequent drying process, and accordingly, an undrying rate of the base polymer may be controlled within the desired range, thereby completing the present invention.

The superabsorbent polymer prepared according to the present invention may realize excellent absorption properties, and in particular, it has excellent drying rate and centrifuge retention capacity (CRC).

Hereinafter, each step of the method of preparing a superabsorbent polymer according to one embodiment of the present invention will be described in detail.

(Polymerizing Step)

The method of preparing a superabsorbent polymer according to one embodiment of the present invention includes the step of forming a water-containing gel polymer by crosslinking-polymerizing a water-soluble ethylenically unsaturated monomer having acidic groups of which at least part is neutralized, in the presence of an internal crosslinking agent, a polymerization initiator, sodium dodecyl sulfate, and a reducing agent.

Specifically, the step is a step of forming a water-containing gel polymer by performing thermal polymerization or photopolymerization of a monomer composition including an internal crosslinking agent, a polymerization initiator, sodium dodecyl sulfate, a specific reducing agent, and a monomer mixture.

Here, use of the sodium dodecyl sulfate may further promote formation of microbubbles when forming the water-containing gel polymer, and at the same time, use of the specific reducing agent in combination therewith may promote the polymerization reaction to effectively capture micropores which are formed inside the polymer at a fast polymerization rate. Accordingly, it is possible to control an undrying rate of the base polymer within a desired range with excellent drying efficiency in the subsequent drying process.

As the reducing agent, one or more selected from the group consisting of oxalic acid, sodium metabisulfite, and sodium benzoate may be used.

The reducing agent may be included in an amount of 500 ppmw to 10,000 ppmw with respect to the weight of the water-soluble ethylenically unsaturated monomer, and when the reducing agent is included within the above range, aggregation of the water-containing gel polymer may be controlled within an appropriate range. Preferably, the reducing agent may be included in an amount of 500 ppmw or more, 800 ppmw or more, 900 ppmw or more, or 1,000 ppmw or more, and 10,000 ppmw or less, 8,000 ppmw or less, 7,000 ppmw or less, 5,000 ppmw or less, 800 ppmw to 8,000 ppmw, 900 ppmw to 7,000 ppmw, 1,000 ppmw to 5,000 ppmw, and the above-described effects may be further improved within the above range.

The sodium dodecyl sulfate may be included in an amount of 500 ppmw to 10,000 ppmw with respect to the weight of the water-soluble ethylenically unsaturated monomer, and it is used in the above range, together with the reducing agent, to effectively form micropores inside the water-containing gel polymer. Preferably, the sodium dodecyl sulfate may be included in an amount of 500 ppmw or more, 800 ppmw or more, 900 ppmw or more, or 1,000 ppmw or more, and 10,000 ppmw or less, 8,000 ppmw or less, 7,000 ppmw or less, 5,000 ppmw or less, 800 ppmw to 8,000 ppmw, 900 ppmw to 7,000 ppmw or 1,000 ppmw to 5,000 ppmw, and the above-described effects may be further improved within the above range.

The water-soluble ethylenically unsaturated monomer may be any monomer commonly used in the preparation of superabsorbent polymers. For non-limiting example, the water-soluble ethylenically unsaturated monomer may be a compound represented by the following Chemical Formula 1:

[Chemical Formula 1]     $R_1\text{-}COOM^1$

in Chemical Formula 1,

R$_1$ is a C2-5 alkyl group containing an unsaturated bond, and

M$^1$ is a hydrogen atom, a monovalent or divalent metal, an ammonium group, or an organic amine salt.

Preferably, the monomer may be one or more selected from the group consisting of acrylic acid, methacrylic acid, and a monovalent metal salt thereof, a divalent metal salt thereof, an ammonium salt thereof, and an organic amine salt thereof. When acrylic acid or a salt thereof is used as the water-soluble ethylenically unsaturated monomer, it is advantageous in that a superabsorbent polymer having improved absorbency may be obtained. In addition, as the monomer, one or more selected from the group consisting of an anionic monomer such as maleic anhydride, fumaric acid, crotonic acid, itaconic acid, 2-acryloyl ethane sulfonic acid, 2-methacryloyl ethane sulfonic acid, 2-(meth)acryloyl propane sulfonic acid, or 2-(meth)acrylamide-2-methylpropane sulfonic acid, and a salt thereof; a nonionic hydrophilic monomer such as (meth)acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and an amino group-containing unsaturated monomer such as (N,N)-dimethylaminoethyl(meth)acrylate or (N,N)-dimethylaminopropyl(meth)acrylamide, and a quaternary compound thereof may be used.

Here, the water-soluble ethylenically unsaturated monomer has acidic groups, of which at least part may be partially neutralized with the neutralizing solution.

In this regard, the degree of neutralization of the monomer may be 40 mol% to 95 mol%, or 40 mol% to 80 mol%, or 45 mol% to 75 mol%, as described above. The range of the degree of neutralization may vary depending on the final physical properties. However, when the degree of neutralization is excessively high, the neutralized monomers are precipitated, and thus polymerization may not readily occur. On the contrary, when the degree of neutralization is excessively low, absorbency of the polymer greatly decreases, and furthermore, the polymer may exhibit hard-to-handle properties, like elastic rubber.

As used herein, the term "internal crosslinking agent" is used to distinguish it from a "surface crosslinking agent" for crosslinking the surface of the base polymer, and the internal crosslinking agent functions to polymerize the water-soluble ethylenically unsaturated monomers by crosslinking the unsaturated bonds thereof. The crosslinking in the above step occurs regardless of the surface or inside of the polymer. However, through the surface crosslinking process of the base polymer described below, the particle surface of the superabsorbent polymer finally prepared has a structure crosslinked by the surface crosslinking agent, and the inside thereof has a structure crosslinked by the internal crosslinking agent.

As the internal crosslinking agent, multifunctional components may be used, and for example, one or more selected from the group consisting of N,N'-methylenebisacrylamide, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate may be used. Preferably, ethylene glycol diglycidyl ether may be used.

The internal crosslinking agent may be included in an amount of 50 ppmw to 1,000 ppmw with respect to the weight of the water-soluble ethylenically unsaturated monomer, and when the internal crosslinking agent is included in the above content range, strength beyond the appropriate level may be realized by sufficient crosslinking. The introduction of the appropriate crosslinked structure may realize sufficient water retention capacity. Preferably, the internal crosslinking agent may be included in an amount of 100 ppmw or more, 200 ppmw or more, 300 ppmw or more, or 600 ppmw or more, and 1,000 ppmw or less, or 800 ppmw or less, and 200 ppmw to 1,000 ppmw, 200 ppmw to 800 ppmw, or 600 ppmw to 800 ppmw. When the content of the internal crosslinking agent is too low, sufficient crosslinking does not occur, and thus it may be difficult to achieve a strength beyond the appropriate level and the drying efficiency may be remarkably reduced, and when the content of the internal crosslinking agent is too high, the internal crosslinking density is increased, and thus it may be difficult to achieve a desired water retention capacity.

As the polymerization initiator, a radical polymerization initiator may be used, and the polymerization initiator initiates the polymerization reaction. When the polymerization initiator is used together with the above-mentioned reducing agent component, it is possible to easily form microbubbles inside the polymer by improving the polymerization reaction rate.

As the polymerization initiator, for example, one or more selected from the group consisting of azo-based compounds such as 2,2-azobis(2-amidinopropane) dihydrochloride, 2,2-azobis-(N,N-dimethylene)isobutyramidine dihydrochloride, 2-(carbamoylazo)isobutylonitrile, and 2,2-azobis[2-(2-imidazolin-2-yl)propane] dihydrochloride, 4,4-azo-bis-(4-cyanovaleric acid); and persulfate-based compounds such as sodium persulfate, potassium persulfate, and ammonium persulfate may be used. Preferably, 2,2-azobis(2-amidinopropane) dihydrochloride or sodium persulfate may be used.

The polymerization initiator may be included in an amount of 500 ppmw to 10,000 ppmw with respect to the weight of the water-soluble ethylenically unsaturated monomer, and it is used in the above range, together with the reducing agent, to promote the polymerization reaction, thereby effectively forming micropores inside the water-containing gel polymer. Preferably, the polymerization initiator may be included in an amount of 500 ppmw or more, 750 ppmw or more, 800 ppmw or more, or 1,000 ppmw or more, and 10,000 ppmw or less, 8,000 ppmw or less, 7,000 ppmw or less, 5,000 ppmw or less, or 1,000 ppmw or less, and 500 ppmw to 8,000 ppmw, 500 ppmw to 1,000 ppmw, 750 ppmw to 1,000 ppmw, 800 ppmw to 8,000 ppmw, 1,000 ppmw to 5,000 ppmw, or 1,500 ppmw to 4,500 ppmw, and the above-described effects may be further improved within the above range.

Further, as the polymerization initiator, a photopolymerization initiator, etc. may be used, in addition to the above-described radical initiator.

As the photopolymerization initiator, for example, one or more compounds selected from the group consisting of benzoin ether, dialkyl acetophenone, hydroxyl alkylketone, phenyl glyoxylate, benzyl dimethyl ketal, acyl phosphine, and $\alpha$-aminoketone may be used. Meanwhile, among them, specific examples of acyl phosphine may include diphenyl(2,4,6-trimethylbenzoyl)phosphine oxide, phenylbis(2,4,6-trimethylbenzoyl)phosphine oxide, ethyl (2,4,6-trimethylbenzoyl)phenylphosphinate or the like. More various photopolymerization initiators are well disclosed in "UV Coatings: Basics, Recent Developments and New Application(Elsevier 2007)" written by Reinhold Schwalm, p 115, but are not limited to the above-described examples.

The photopolymerization initiator may be added in an amount of 10 ppmw to 30,000 ppmw, preferably, 30 ppmw to 10,000 ppmw, or 50 ppmw to 5,000 ppmw with respect to the weight of the water-soluble ethylenically unsaturated monomer.

In addition, the monomer composition may further include additives such as a blowing agent, a thickener, a plasticizer, a storage stabilizer, an antioxidant, etc., as needed.

The blowing agent serves to increase the surface area by forming pores inside the water-containing gel polymer by foaming during polymerization. As the blowing agent, carbonate may be used, and for example, sodium bicarbonate, sodium carbonate, potassium bicarbonate, potassium carbonate, calcium bicarbonate, calcium carbonate, magnesium bicarbonate, or magnesium carbonate may be used. As a commercially available blowing agent, F-36D which is an encapsulated blowing agent may be used, but is not limited thereto.

Further, the blowing agent may be preferably used in an amount of 1,500 ppmw or less with respect to the weight of the water-soluble ethylenically unsaturated monomer. When the use of the blowing agent exceeds 1,500 ppmw, too many pores are formed to deteriorate gel strength of the superabsorbent polymer and to decrease density, which may cause problems in distribution and storage. Further, the blowing agent may be preferably used in an amount of 500 ppmw or more, or 1,000 ppmw or more with respect to the weight of the water-soluble ethylenically unsaturated monomer.

Further, the monomer composition may be prepared in a solution form, in which the raw materials such as the above-described reducing agent, internal crosslinking agent, water-soluble ethylenically unsaturated monomer, polymerization initiator, etc. are dissolved in a solvent.

In this regard, as the applicable solvent, any solvent may be used without limitations in the composition, as long as it is able to dissolve the above-described raw materials. For example, as the solvent, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, N,N-dimethylacetamide, or a mixture thereof may be used.

The step of forming the water-containing gel polymer through polymerization of the monomer composition may be performed by a common polymerization method, and the process thereof is not particularly limited. For non-limiting example, the polymerization method is largely classified into thermal polymerization and photopolymerization according to the kind of a polymerization energy source. When the thermal polymerization is performed, it may be performed in a reactor like a kneader equipped with agitating spindles. When the photopolymerization is performed, it may be performed in a reactor equipped with a movable conveyor belt.

For example, the monomer composition is injected to the reactor like the kneader equipped with the agitating spindles, and thermal polymerization is carried out by providing hot air thereto or by heating the reactor, thereby obtaining the water-containing gel polymer. In this regard, the water-containing gel polymer may be obtained as particles having a size of centimeters or millimeters when it is discharged from an outlet of the reactor, according to the type of agitating spindles equipped in the reactor. Specifically, the water-containing gel polymer may be obtained in various forms according to a concentration of the monomer composition fed thereto, a feeding speed or the like, and the water-containing gel polymer having a (weight average) particle size of 2 mm to 50 mm may be generally obtained.

For another example, when the monomer composition is subjected to photopolymerization in the reactor equipped with the movable conveyor belt, the water-containing gel polymer may be obtained in a sheet-type. In this regard, the thickness of the sheet may vary according to the concentration of the monomer composition fed thereto and the feeding speed. The sheet is preferably controlled at a thickness of 0.5 cm to 10 cm in order to assure the production speed while allowing the entire sheet to be uniformly polymerized.

The water-containing gel polymer thus obtained by such a method may exhibit a water content of 40% by weight to 80% by weight. Meanwhile, the "water content", as used throughout the specification, means a weight occupied by water with respect to the total weight of the water-containing gel polymer, which may be a value obtained by subtracting the weight of the dried polymer from the weight of the water-containing gel polymer. Specifically, the water content may be defined as a value calculated by measuring the weight loss due to evaporation of moisture in the polymer during the process of drying by raising the temperature of the polymer through infrared heating. At this time, the water content is measured under the drying conditions as follows: the drying temperature is increased from room temperature to about 180°C and then the temperature is maintained at 180°C, and the total drying time is set to 20 minutes, including 5 minutes for the temperature rising step.

(Drying Step)

Next, the step of preparing a base polymer by drying the water-containing gel polymer is included.

As needed, the step of coarsely pulverizing the water-containing gel polymer may be performed, before drying, in order to increase efficiency of the drying process. A pulverizer to be applicable may include, but there is no limitation in the configuration, specifically, any one selected from the group consisting of a vertical pulverizer, a turbo cutter, a turbo grinder, a rotary cutter mill, a cutter mill, a disc mill, a shred crusher, a crusher, a chopper, and a disc cutter, but is not limited to the above-described examples.

The drying step is a step of preparing a base polymer having a desired particle size by removing water which is present in the water-containing gel polymer. By using the specific reducing agent in the above-described polymerization step, micropores may be easily formed inside the polymer, and accordingly, appropriate pore space is formed in the dry product, thereby improving the drying efficiency of the drying step.

In this regard, the drying temperature of the drying step may be about 150°C to about 250°C. As described above, by using the specific reducing agent in the polymerization step, excellent drying efficiency may be achieved even under relatively mild drying conditions, and thus the undrying rate of the base polymer may be controlled within a desired range.

Meanwhile, when the drying temperature is lower than 150°C, it is apprehended that the drying time becomes too long and the physical properties of the superabsorbent polymer finally formed may be deteriorated. When the drying temperature is higher than 250°C, it is apprehended that only the polymer surface is excessively dried, and thus fine particles may be generated during the subsequent pulverization process, and the process cost increases, leading to reduction in the economic efficiency. Preferably, the drying may be performed at a temperature of 150°C to 200°C, and more preferably, at a temperature of 150°C to 185°C. The drying may be performed in multiple stages by varying the temperature within the above temperature range.

The drying step may be performed for 30 minutes to 60 minutes, and when the time of the drying step is less than 30 minutes, the inside of the dry layer which is the drying target is not sufficiently dried and it is difficult to achieve the desired undrying rate. When the time exceeds 60 minutes, the drying efficiency decreases, and there is a possibility of polymer degradation in some particles. The time of the drying step is the sum of the execution times of individual stages, when drying is performed in multiple stages.

The drying step may be preferably performed by hot air drying, and in this case, it means drying by hot air satisfying the above-described temperature range. In the drying step, the number of hot air injection is not particularly limited, and hot air may be injected several times, as long as the total drying time satisfies the described range.

The drying may be performed in a fixed-bed type, which refers to a drying method, in which a material to be dried is fixed on a floor such as a perforated plate through which air can pass, and hot air passes through the material from bottom to top to dry. Specifically, the drying is performed using a ventilated belt dryer equipped with the perforated plate. Specifically, the drying is performed by putting a chopped mixture which is a drying target into a perforated plate, and accordingly, the drying means injecting upward air from the bottom to the top of the perforated plate, and injecting downward air from the top to the bottom of the chopped mixture which is placed on the perforated plate.

The hot air drying may be performed by injecting hot air at a linear velocity of 0.5 m/s to 3.0 m/s, 0.7 m/s to 2.5 m/s, 0.85 m/s to 2.0 m/s. When satisfying the above range of velocity, it is possible to uniformly dry even the inside of the drying target, which is preferable. When the linear velocity is less than 0.5 m/s, it is difficult for the hot air to reach the inside of the drying target, and when the linear velocity exceeds 3.0 m/s, there is a possibility that the drying target is scattered inside the dryer.

The undrying rate of the base polymer prepared through the drying step is 3 wt% or less. The undrying rate indicates the degree of drying of crumb-type powder, which is relatively large in size and difficult to dry, among the base polymers, and is one of the indicators of drying efficiency.

Specifically, the undrying rate means a weight ratio of the base polymer that does not pass through a 4 mesh sieve when the base polymer is classified with the sieve according to ASTM E11, and means that particles not passing through the sieve during the process of classifying with the 4 mesh sieve for 10 minutes or more are not sufficiently dried, and thus re-agglomeration occurs due to internal moisture. Practically, the water content of the particles not passing through the sieve when classifying with the 4 mesh sieve for 10 minutes or more is 10% or more.

The undrying rate is better as the value is smaller, and the lower limit of the undrying rate is 0 wt%. Preferably, the undrying rate is 0wt% or more, 0.001wt% or more, 0.01wt% or more, or 0.1wt% or more, and 3wt% or less, 1wt% or less, 0.7wt% or less, or 0.5wt% or less, or 0wt% to 3wt%, 0wt% to 1wt%, 0.01wt% to 3wt%, 0.01wt% to 1wt%, or 0.01wt% to 0.7wt%. The method of measuring the undrying rate of the base polymer will be more specifically explained in Experimental Example to be described later.

The base polymer has a centrifuge retention capacity (CRC) of 60.0 g/g or more, preferably, 62.0 g/g or more, or 90.0 g/g or less, 87.0 g/g or less, or 60 g/g to 90 g/g or 62 g/g to 87 g/g, as measured according to the EDENA method WSP 241.3. The method of measuring the centrifuge retention capacity will be more specifically explained in Experimental Example to be described later.

(Pulverizing and Classifying Step)

As described above, the base polymer prepared as above exhibits excellent drying efficiency, and only the process of classifying with the sieve makes it possible to produce the polymer having the desired particle size. Accordingly, the step of pulverizing and classifying the base polymer may be further included, optionally.

The polymer powder obtained after the pulverizing step may have a particle size of 150 $\mu$m to 850 $\mu$m. A pulverizer used for pulverizing into such a particle size may be specifically a pin mill, a hammer mill, a screw mill, a roll mill, a disc mill, or a jog mill, etc., but is not limited to the above-described examples.

Further, in order to manage physical properties of the superabsorbent polymer powder that is finally commercialized after the pulverization step, the polymer powder obtained after the pulverization may be subjected to a separate process of classifying according to the particle size. Preferably, a polymer having a particle size of 150 $\mu$m to 850 $\mu$m is classified, and only the polymer powder having such a particle size is subjected to a surface crosslinking reaction, followed by commercialization. More specifically, the base polymer thus classified may have a particle size of 150 $\mu$m to 850 $\mu$m, and may include 50% by weight or more of particles having a particle size of 300 $\mu$m to 600 $\mu$m.

(Surface-crosslinking step)

Next, the method of preparing a superabsorbent polymer according to one embodiment of the present invention further includes the step of crosslinking a part of the surface of the base polymer by heat treatment of the base polymer in the presence of a surface crosslinking agent.

The surface crosslinking step is to induce a crosslinking reaction on the surface of the base polymer in the presence of the surface crosslinking agent, and unsaturated bonds of the water-soluble ethylenically unsaturated monomers, which remain uncrosslinked on the surface, may be crosslinked by the surface crosslinking agent, and as a result, the superabsorbent polymer having an increased surface crosslinking density may be formed.

Specifically, a surface-crosslinked layer may be formed by the heat treatment process in the presence of the surface crosslinking agent, and the heat treatment process increases the surface crosslinking density, i.e., the external crosslinking density, whereas the internal crosslinking density does not change. The superabsorbent polymer, in which the surface-crosslinked layer is formed, may have a structure in which the external crosslinking density is higher than the internal crosslinking density.

In the surface-crosslinking step, a surface crosslinking agent composition including an alcohol-based solvent and water may be used, in addition to the surface crosslinking agent.

Meanwhile, as the surface crosslinking agent included in the surface crosslinking agent composition, any crosslinking agent component that has been traditionally used in the preparation of superabsorbent polymers may be used without any particular limitation. For example, the surface crosslinking agent may include one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, and glycerol; one or more carbonate-based compounds selected from the group consisting of ethylene carbonate and propylene carbonate; epoxy compounds such as ethylene glycol diglycidyl ether, etc.; oxazoline compounds such as oxazolidinone, etc.; polyamine compounds; oxazoline compounds; mono-, di-, or polyoxazolidinone compounds; or cyclic urea compounds, etc. Preferably, those the same as the above-described internal crosslinking agent may be used, and for example, a diglycidyl etherbased compound of alkylene glycol, such as ethyleneglycol diglycidyl ether, etc., may be used.

Such a surface crosslinking agent may be used in an amount of 0.001 part by weight to 2 parts by weight with respect to 100 parts by weight of the base polymer. Preferably, the surface crosslinking agent may be used in an amount of 0.005 parts by weight or more, 0.01 part by weight or more, or 0.02 parts by weight or more, and 0.5 parts by weight or less, 0.3 parts by weight or less. By controlling the content range of the surface crosslinking agent within the above-described range, it is possible to prepare a superabsorbent polymer exhibiting excellent overall physical properties, such as absorption performances, liquid permeability, etc.

Meanwhile, the surface crosslinking agent is added to the base polymer in the form of a surface crosslinking agent composition containing the same. There is no particular limitation on the method of adding the surface crosslinking agent composition. For example, a method of placing the surface crosslinking agent composition and the base polymer in a reactor and mixing them, a method of spraying the surface crosslinking agent onto the base polymer, a method of continuously supplying the base polymer and the surface crosslinking agent composition to a mixer continuously operated and mixing them, etc. may be used.

The surface crosslinking agent composition may further include water and/or hydrophilic organic solvent as a medium. Therefore, it is advantageous in that the surface crosslinking agent may be evenly dispersed on the base polymer. At this time, the amount of water and the hydrophilic organic solvent may be preferably controlled with respect to 100 parts by weight of the base polymer in order to induce uniform dissolution/dispersion of the surface crosslinking agent, to prevent agglomeration of the base polymer, and at the same time, to optimize the surface penetration depth of the surface crosslinking agent.

The surface crosslinking step may be performed by heat treatment at a temperature of 110°C to 200°C, or 110°C to 150°C for 30 minutes or more. More specifically, in the surface crosslinking, the above-described temperature is determined as the maximum reaction temperature, and the surface crosslinking reaction may be performed by heat treatment at this maximum reaction temperature for 30 minutes to 80 minutes, or 40 minutes to 70 minutes.

By satisfying these surface crosslinking process conditions (particularly, heating conditions and reaction conditions at the maximum reaction temperature), it is possible to prepare a superabsorbent polymer that appropriately satisfies physical properties such as excellent liquid permeability under pressure, etc.

A heating means for the surface crosslinking reaction is not particularly limited. Heating may be performed by providing a heating medium or by directly providing a heat source. In this regard, the kind of the applicable heating medium may be steam, hot air, a hot fluid such as hot oil or the like, but is not limited thereto. The temperature of the heating medium to be provided may be properly selected in consideration of the means of the heating medium, the heating rate, and the heating target temperature. Meanwhile, as the heat source to be directly provided, an electric heating or gas heating method may be used, but is not limited to the above-described examples.

Meanwhile, in the method of preparing a superabsorbent polymer according to one embodiment of the present invention, aluminum salts such as aluminum sulfate salts and other various polyvalent metal salts may be further used during surface crosslinking in order to further improve liquid permeability, etc. These polyvalent metal salts may be included on the surface crosslinked layer of the superabsorbent polymer finally prepared.

(Superabsorbent polymer)

The above-described superabsorbent polymer prepared according to one embodiment may have a particle size of 150 $\mu$m to 850 $\mu$m. More specifically, at least 95% by weight or more of the superabsorbent polymer may have a particle size of 150 $\mu$m to 850 $\mu$m, and the superabsorbent polymer may include 50% by weight or more of particles having a particle size of 300 $\mu$m to 600 $\mu$m, and less than 3% by weight of fine particles having a particle size of less than 150 $\mu$m.

The above-described superabsorbent polymer prepared according to one embodiment realizes excellent absorption properties, and in particular, has excellent centrifuge retention capacity and absorbency under pressure.

Hereinafter, the actions and effects of the present invention will be described in more detail with reference to specific exemplary embodiments of the present invention. However, these exemplary embodiments are provided only for illustrating the present invention, and the scope of the present invention is not limited thereto.

**[Example]**

**<Preparation of superabsorbent polymer>**

**Example 1**

(Step 1)

To a 3L glass container equipped with a stirrer and a thermometer, 500 g of acrylic acid, 600 ppmw (relative to 100 parts by weight of acrylic acid) of ethylene glycol diglycidyl ether which is an internal crosslinking agent, 5,000 ppmw (relative to acrylic acid) of oxalic acid as a reducing agent, 80 ppmw (relative to 100 parts by weight of acrylic acid) of diphenyl(2,4,6-trimethylbenzoyl)phosphine oxide which is a photopolymerization initiator were put and dissolved, and then 627 g of a 31.5wt% caustic soda solution was added to prepare a water-soluble unsaturated monomer aqueous solution (degree of neutralization: 70 mol%; solid content: 44.9% by weight). When the temperature of the water-soluble unsaturated monomer aqueous solution increased to 40°C due to the heat of neutralization, this mixed solution was put in a container containing 750 ppmw (relative to 100 parts by weight of acrylic acid) of 2,2-azobis-(2-amidinopropane) dihydrochloride which is a radical polymerization initiator and 1,000 ppmw (relative to 100 parts by weight of acrylic acid) of a blowing agent F36D, and 1,000 ppmw (relative to 100 parts by weight of acrylic acid) of sodium dodecyl sulfate, and then UV polymerization was performed by UV radiation (irradiation dose: 10 mV/cm$^2$) for 1 minute to obtain a water-containing gel polymer sheet.

The obtained water-containing gel polymer sheet was passed through a chopper having a hole size of 16 mm to prepare crumbs.

Next, the crumbs were dried in an oven capable of shifting airflow up and down. The drying was performed in multiple stages, and specifically, performed using an air flow oven at 150°C for 13 minutes, at 170°C for 5 minutes, at 175°C for 5 minutes, at 180°C for 5 minutes, and at 160°C for 5 minutes. Through the drying process, a superabsorbent polymer including the base polymer was prepared.

**Examples 2 to 5 and Comparative Examples 1 to 7**

Each superabsorbent polymer was prepared in the same manner as in Example 1, except that components and contents of the following Table 1 were used in the polymerization step.

[Table 1]

| Section | Polymerization step | | | | Drying step | Pulverizing step |
| --- | --- | --- | --- | --- | --- | --- |
| | Internal crosslinking agent (kind/content*) | Reducing agent (kind/content*) | Radical polymerization initiator (kind/content*) | SDS (content *) | (Temperature °C/T ime min) | (kind/ content*) |
| Example 1 | A-1/600 | B-1/5,000 | C-1/750 | 1,000 | 150/13-170/5-175/5-180/5-160/5 | - |
| Example 2 | A-1/600 | B-2/1,000 | C-1/750 | 1,000 | same as above | - |
| Example 3 | A-1/600 | B-3/1,000 | C-1/750 | 1,000 | same as above | - |
| Example 4 | A-1/200 | B-1/5,000 | C-1/750 | 1,000 | same as above | - |
| Example 5 | A-1/800 | B-1/5,000 | C-1/750 | 1,000 | same as above | - |
| Example 6 | A-1/600 | B-3/1,000 | C-1/750 | 800 | same as above | - |
| Example 7 | A-1/600 | B-3/1,000 | C-1/750 | 3,000 | same as above | - |
| Example 8 | A-1/600 | B-3/1,000 | C-1/750 | 5,000 | same as above | - |
| Comparative Example 1 | A-1/600 | - | C-1/750 | 1,000 | 150/5-150/8-170/5-175/5-180/5-160/5 | - |
| Comparative Example 2 | A-1/600 | - | C-1/750 | 1,000 | same as above | B-1/5,000 |
| Comparative Example 3 | A-1/600 | - | C-1/750 | 1,000 | same as above | B-2/1,000 |
| Comparative Example 4 | A-1/600 | - | C-1/750 | 1,000 | same as above | B-3/1,000 |
| Comparative Example 5 | A-1/600 | - | C-1/750 | 1,000 | same as above | B-3/5,000 |
| Comparative Example 6 | A-1/200 | - | C-1/750 | 1,000 | same as above | B-3/1,000 |
| Comparative Example 7 | A-1/600 | B-1/5,000 | C-1/750 | - | same as above | - |

Internal crosslinking agent (*ppmw relative to the weight of water-soluble ethylenically unsaturated monomer)

A-1: Ethylene glycol diglycidyl ether

reducing agent (*ppmw relative to the weight of water-soluble ethylenically unsaturated monomer)

EP 4 386 014 A1

(continued)

| Section | Polymerization step | | | | Drying step | Pulverizing step |
|---|---|---|---|---|---|---|
| | Internal crosslinking agent (kind/content*) | Reducing agent (kind/content*) | Radical polymerization initiator (kind/content*) | SDS (content *) | (Temperature °C/T ime min) | (kind/ content*) |
| B-1: oxalic acid | | | | | | |
| B-2: sodium metabisulfite | | | | | | |
| B-3: sodium benzoate | | | | | | |
| radical polymerization initiator (*ppmw relative to the weight of water-soluble ethylenically unsaturated monomer) | | | | | | |
| C-1: 2,2-azobis-(2-amidinopropane) dihydrochloride | | | | | | |
| SDS(Sodium dodecyl sulfate) (*ppmw relative to the weight of water-soluble ethylenically unsaturated monomer) | | | | | | |

**<Experimental Example>**

Physical properties of the superabsorbent polymers including the base polymer, each prepared in Examples and Comparative Examples, were evaluated by the following methods, and the results are shown in Table 2.

(1) Centrifuge Retention Capacity (CRC)

With respect to the base polymers prepared in Examples and Comparative Examples, those having a particle size of 150 μm to 850 μm were taken, and the centrifuge retention capacity (CRC) by absorbency under no load was measured in accordance with European Disposables and Nonwovens Association (EDANA) standard EDANA WSP 241.2.

In detail, from the base polymers obtained through Examples and Comparative Examples, polymers classified with #30-50 sieve were obtained. The polymer WO(g) (about 0.2 g) was evenly put in a nonwoven fabric-made bag, followed by sealing. Then, the bag was immersed in a physiological saline solution (0.9 wt %) at room temperature. After 30 minutes, water was removed from the bag using a centrifuge at 250 G for 3 minutes, and the weight W2(g) of the bag was then measured. Further, the same procedure was carried out without using the polymer, and then the resultant weight W1(g) was measured. By using the respective weights thus obtained, CRC (g/g) was calculated according to the following Equation 1.

[Equation 1]

$$CRC\ (g/g) = \{[W2(g) - W1(g)]/W0(g)\} - 1$$

(2) Evaluation of undrying rate

With respect to the base polymers prepared in Examples and Comparative Examples, the undrying rate was evaluated according to Equation 2, and the results are shown in Table 2.

In detail, with respect to the initial weight A'1 (g) of the base polymer sample (A1), the base polymer sample (A1) was classified with a 4 mesh sieve for 10 minutes according to ASTM E11, and the sample (A2) not passing through the sieve was obtained, and the ratio of the weight A'2 (g) of the sample not sieved by the sieve was measured.

[Equation 2]

$$\text{Undrying rate (wt\%)} = \{[A'1(g) - A'2(g)]/A'1(g)\} * 100$$

[Table 2]

| Section | Base polymer | |
|---|---|---|
| | Undrying rate(wt%) | CRC(g/g) |
| Example 1 | 0 | 67.6 |
| Example 2 | 0 | 85.3 |
| Example 3 | 0 | 69.6 |
| Example 4 | 1.0 | 70.1 |
| Example 5 | 0 | 62.5 |
| Example 6 | 0 | 76.7 |
| Example 7 | 0 | 72.5 |
| Example 8 | 0 | 81.0 |
| Comparative Example 1 | 4.0 | 59.0 |
| Comparative Example 2 | 3.8 | 58.3 |
| Comparative Example 3 | 3.4 | 57.7 |

(continued)

| Section | Base polymer | |
|---|---|---|
| | Undrying rate(wt%) | CRC(g/g) |
| Comparative Example 4 | 3.5 | 58.8 |
| Comparative Example 5 | 3.4 | 57.8 |
| Comparative Example 6 | 6.5 | 64.0 |
| Comparative Example 7 | 4.1 | 59.9 |

As confirmed from the data of Table 2, it was confirmed that Examples according to the preparation method of the present invention achieved excellent drying efficiency and CRC property at the same time by using the specific reducing agent compound and sodium dodecyl sulfate in combination in the polymerization step.

In Comparative Example 1 in which the reducing agent of the present invention was not used, it was confirmed that pores inside the polymer were not sufficiently formed, and thus the undrying rate increased due to the re-agglomeration of the particles in the drying process.

In Comparative Examples 2 to 6, in which even though the same reducing agent compound as in the present invention was included, it was used in the pulverization step rather than in the polymerization step, it was confirmed that the undrying rate significantly increased and the CRC values of the base polymers slightly decreased, as compared to those of Examples.

In addition, in Comparative Example 7, in which SDS was not included, it was confirmed that it was difficult to form pores inside the polymer, and thus the undrying rate value increased, and the CRC value decreased, as compared to those of Examples.

**Claims**

1. A method of preparing a superabsorbent polymer, the method comprising the steps of:

   forming a water-containing gel polymer by crosslinking-polymerizing a water-soluble ethylenically unsaturated monomer having acidic groups of which at least part is neutralized, in the presence of an internal crosslinking agent, a polymerization initiator, sodium dodecyl sulfate, and a reducing agent; and
   preparing a base polymer by drying the water-containing gel polymer,
   wherein the reducing agent is one or more selected from the group consisting of oxalic acid, sodium metabisulfite, and sodium benzoate, and
   the base polymer has an undrying rate of 3wt% or less, the undrying rate defined as a weight ratio of the base polymer that does not pass through a 4 mesh sieve when the base polymer is classified with the sieve according to ASTM E11.

2. The method of claim 1, wherein the undrying rate of the base polymer is 1wt% or less.

3. The method of claim 1, wherein the base polymer has centrifuge retention capacity (CRC) of 60.0 g/g or more according to the EDENA method WSP 241.3.

4. The method of claim 1, wherein the reducing agent is included in an amount of 500 ppmw to 10,000 ppmw with respect to the weight of the water-soluble ethylenically unsaturated monomer.

5. The method of claim 1, wherein the sodium dodecyl sulfate is included in an amount of 500 ppmw to 10,000 ppmw with respect to the weight of the water-soluble ethylenically unsaturated monomer.

6. The method of claim 1, wherein the internal crosslinking agent is one or more selected from the group consisting of N,N'-methylenebisacrylamide, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate.

7. The method of claim 1, wherein the internal crosslinking agent is included in an amount of 50 ppmw to 1,000 ppmw with respect to the weight of the water-soluble ethylenically unsaturated monomer.

8. The method of claim 1, wherein the polymerization initiator is selected from the group consisting of azo-based compounds such as 2,2-azobis(2-amidinopropane) dihydrochloride, 2,2-azobis-(N,N-dimethylene)isobutyramidine dihydrochloride, 2-(carbamoylazo)isobutylonitrile, and 2,2-azobis[2-(2-imidazolin-2-yl)propane] dihydrochloride, 4,4-azobis-(4-cyanovaleric acid); and
persulfate-based compounds such as sodium persulfate, potassium persulfate, and ammonium persulfate.

9. The method of claim 1, wherein the polymerization initiator is included in an amount of 500 ppmw to 10,000 ppmw with respect to the weight of the water-soluble ethylenically unsaturated monomer.

10. The method of claim 1, further comprising the step of crosslinking a part of the surface of the base polymer by heat treatment of the base polymer in the presence of a surface crosslinking agent.

# EP 4 386 014 A1

<table>
<tr><td colspan="2" rowspan="2"><b>INTERNATIONAL SEARCH REPORT</b></td><td>International application No.</td></tr>
<tr><td><b>PCT/KR2022/016113</b></td></tr>
</table>

**A. CLASSIFICATION OF SUBJECT MATTER**

**C08F 8/04**(2006.01)i; **C08F 2/44**(2006.01)i; **C08F 4/04**(2006.01)i; **C08F 220/06**(2006.01)i; **C08J 3/24**(2006.01)i

According to International Patent Classification (IPC) or to both national classification and IPC

**B. FIELDS SEARCHED**

Minimum documentation searched (classification system followed by classification symbols)

C08F 8/04(2006.01); C08F 2/01(2006.01); C08F 20/06(2006.01); C08F 8/00(2006.01); C08F 8/28(2006.01);
C08J 3/12(2006.01); C08J 3/24(2006.01); C08J 9/32(2006.01); C08J 9/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), Google & keywords: 고흡수(absorbent, super-absorbent, SAP), 소듐도데실설페이트(sodium dodecyl sulfate, sodium lauryl sulfate), 환원제(reducing agent), 옥살산(oxalic acid), 메타중아황산나트륨(sodium metabisulfite), 벤조산나트륨(sodium benzoate)

**C. DOCUMENTS CONSIDERED TO BE RELEVANT**

| Category* | Citation of document, with indication, where appropriate, of the relevant passages | Relevant to claim No. |
|---|---|---|
| X | CN 113004550 A (WANHUA CHEMICAL GROUP CO., LTD. et al.) 22 June 2021 (2021-06-22)<br>See paragraphs [0037]-[0050] and [0085]-[0088]. | 1-10 |
| A | CN 113372611 A (WANHUA CHEMICAL GROUP CO., LTD.) 10 September 2021 (2021-09-10)<br>See claims 1-9. | 1-10 |
| A | KR 10-2020-0041644 A (LG CHEM, LTD.) 22 April 2020 (2020-04-22)<br>See claims 1-10. | 1-10 |
| A | JP 2018-145328 A (KURARAY CO., LTD.) 20 September 2018 (2018-09-20)<br>See claims 1-8. | 1-10 |
| A | KR 10-2019-0072294 A (LG CHEM, LTD.) 25 June 2019 (2019-06-25)<br>See entire document. | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 February 2023** | **02 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/016113**

| Patent document cited in search report | | | Publication date (day/month/year) | Patent family member(s) | | | Publication date (day/month/year) |
|---|---|---|---|---|---|---|---|
| CN | 113004550 | A | 22 June 2021 | CN | 113004550 | B | 12 July 2022 |
| CN | 113372611 | A | 10 September 2021 | None | | | |
| KR | 10-2020-0041644 | A | 22 April 2020 | None | | | |
| JP | 2018-145328 | A | 20 September 2018 | None | | | |
| KR | 10-2019-0072294 | A | 25 June 2019 | KR | 10-2475854 | B1 | 07 December 2022 |

Form PCT/ISA/210 (patent family annex) (July 2022)

**EP 4 386 014 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210141344

- KR 1020220135391

### Non-patent literature cited in the description

- **REINHOLD SCHWALM.** UV Coatings: Basics, Recent Developments and New Application. Elsevier, 2007, 115